Europäisches Patentamt

European Patent Office

Office européen des brevets

(19)

(11) Veröffentlichungsnummer: **0 061 721 B1**

## EUROPÄISCHE PATENTSCHRIFT

(12)

(45) Veröffentlichungstag der Patentschrift: **10.08.94**

(21) Anmeldenummer: **82102473.4**

(22) Anmeldetag: **24.03.82**

Teilanmeldung 94101668.5 eingereicht am 24/03/82.

(51) Int. Cl.⁵: **F25B 15/02**, F25B 25/02

(54) **Mehrstufige Einrichtung mit Arbeitsfluid- und Absorptionsmittel-Kreisläufen, und Verfahren zum Betrieb einer solchen Einrichtung.**

(30) Priorität: 24.03.81 DE 3111552
28.04.81 DE 3116788
19.06.81 DE 3124007
17.08.81 DE 3132461
12.02.82 DE 3204902
18.02.82 DE 3205872

(43) Veröffentlichungstag der Anmeldung:
**06.10.82 Patentblatt 82/40**

(45) Bekanntmachung des Hinweises auf die Patenterteilung:
**10.08.94 Patentblatt 94/32**

(84) Benannte Vertragsstaaten:
**AT BE CH DE FR GB IT LI NL SE**

(56) Entgegenhaltungen:
BE-A- 875 277     DE-A- 1 601 003
DE-A- 2 944 960   DE-B- 1 015 455
DE-C- 278 076     DE-C- 678 942
DE-C- 953 378     US-A- 2 182 098
US-A- 2 182 453   US-A- 3 440 832
US-A- 3 483 710   US-A- 3 854 301
US-A- 4 009 575

(73) Patentinhaber: **Alefeld, Georg, Prof. Dr.**
**Josef-Raps-Strasse 3**
**D-80805 München(DE)**

(72) Erfinder: **Alefeld, Georg, Prof. Dr.**
**Josef-Raps-Strasse 3**
**D-80805 München(DE)**

(74) Vertreter: **von Bezold, Dieter, Dr. et al**
**Dr. Dieter von Bezold**
**Dipl.-Ing. Peter Schütz**
**Dipl.-Ing. Wolfgang Heusler**
**Brienner Strasse 52**
**D-80333 München (DE)**

**Beschreibung**

Die vorliegende Erfindung geht aus von einer mehrstufigen Einrichtung zum Nutzbarmachen von Wärmeenergie, die mindestens sechs Austauscheinheiten enthält, welche als Austreiber, Kondensator, Verdampfer bzw. Absorber arbeiten, paarweise in drei verschiedenen Druckbereichen arbeiten und mindestens zwei Arbeitsmittelkreisläufe bilden, von denen der eine, erste, dem das Arbeitsmittel mit einem Durchsatz n zirkuliert, die beiden Austauscheinheiten im oberen Druckbereich und die beiden Austauscheinheiten im mittleren Druckbereich enthält, und der andere, zweite, in dem Arbeitsmittel mit dem Durchsatz m zirkuliert, die beiden Austauscheinheiten im mittleren Druckbereich und die beiden Austauscheinheiten im unteren Druckbereich enthält, wobei ein positives Vorzeichen von m oder n einem Zirkulieren des Arbeitsmittels im Sinne einer Wärmepumpe und ein negatives Vorzeichen von n oder m ein Zirkulieren des Arbeitsmittels im Sinne eines Wärmetransformators bedeutet. Eine solche Einrichtung ist aus dem Dokument US-A-3,651,655 (Dyre) bekannt.

In einem Absorptionsmittelkreislauf wird ein Arbeitsfluid in einem Absorptionsmittel absorbiert oder gelöst, in ein anderes Druckniveau übergeführt und dort wieder desorbiert oder verdampft (die Begriffe Absorptionsmittel - Lösungsmittel Absorbieren - Lösen - Resorbieren und Verdampfen - Desorbieren sollen hier als technisch äquivalent angesehen werden).

Eine Austauscheinheit ist eine Komponente eines Arbeitsfluidkreislaufes, in der zumindest bei bestimmten Betriebsarten der Einrichtung der Wärmeinhalt des in der betreffenden Einheit enthaltenen Arbeitsfluids und gegebenenfalls des Absorptionsmittels geändert wird. Dabei ändert sich im allgemeinen der Phasenzustand des Arbeitsfluids durch Desorbieren (im Austreiber) durch Kondensieren (im Kondensator), durch Verdampfen (im Verdampfer) und durch Absorbieren (im Absorber). Die Funktionen mancher Austauscheinheiten der vorliegenden Einrichtungen kann bei verschiedenen Betriebsarten der betreffenden Einrichtung verschieden sein.

Die Begriffe "Austreiber" und "Absorber" sollen auch für Austauscheinheiten verwendet werden, die die Funktionen "Desorber" und "Resorber" in einer Resorptionsmaschine ausüben.

Einstufige, also einen einzigen Arbeitsfluidkreislauf enthaltende Kompressions- und Absorber-Kältemaschinen und Wärmepumpen (siehe z.B. ASHRAE Handbook of Fundamentals (S. 19-24)) sind weit verbreitet und haben einen hohen Entwicklungsstand erreicht.

Mehrstufige Absorptions-Kältemaschinen sind z.B. aus Niebergall, W; Sorptions-Kältemaschinen HANDBUCH DER KÄLTETECHNIK, Band 7 Hrsg. R. Plank, Berlin-New York-Heidelberg, Springer-Verlag 1959, insbesondere S. 71 bis 91, bekannt.

Die im Anspruch 1 gekennzeichnete Erfindung löst die Aufgabe, Einrichtungen gemäß dem Oberbegriff des Anspruchs 1 so weiterzubilden, daß sie höhere Temperaturdifferenzen zu überbrücken vermögen und/oder höhere Wirkungsgrade erreichen und/oder besser auf sich ändernde Temperaturverhältnisse reagieren können als die als bekannt vorausgesetzten Einrichtungen.

Im folgenden wird die Erfindung unter Bezugnahme auf die Zeichnungen näher erläutert. Es zeigen:

| | |
|---|---|
| Fig. 1 | eine schematische Darstellung eines elementaren Absorberkreises, |
| Fig. 2 | eine schematische Darstellung einer zweistufigen Absorberschaltung, die man erhält, wenn man zwei elementare Absorberkreise gemäß Fig. 1 so zusammenschaltet, daß sie zwei Austauscheinheiten gemeinsam haben, |
| Fig. 3 | eine graphische Darstellung von Betriebsbereichen der Schaltung gemäß Fig. 2; |
| Fig. 4 | eine etwas genauere schematische Darstellung einer Einrichtung mit der Schaltung gemäß Fig. 2, |
| Fig. 5a bis Fig. 5d und Fig. 6a bis 6d, | weitere Ausführungsbeispiele der Erfindung. |

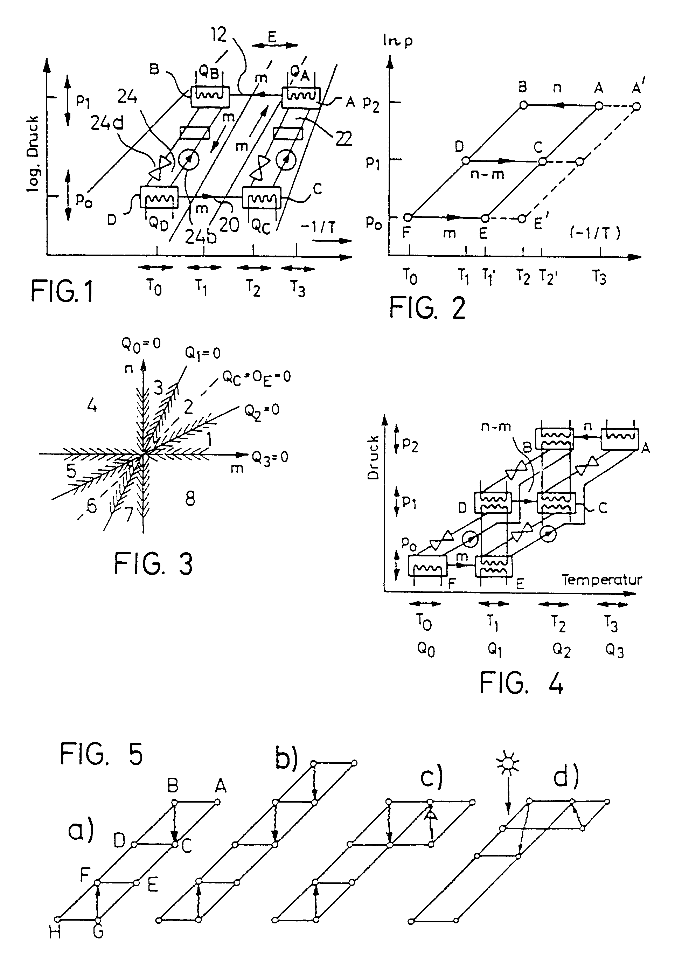

Der elementare Absorberkreis gemäß Fig. 1 enthält vier Austauscheinheiten A, B, C und D. Die Austauscheinheiten A und B arbeiten in einem relativ hohen Druckbereich $P_1$, die Austauscheinheiten C und D in einem relativ niedrigen Druckbereich $P_O$. Die Austauscheinheiten D, B, C und A arbeiten in den Temperaturbereichen $T_0$, $T_1$, $T_2$ bzw. $T_3$, deren mittlere Temperaturen in der angegebenen Reihenfolge zunehmen. Die Austauscheinheiten A und B sind durch eine Arbeitsfluidleitung 12, die Austauscheinheiten C und D durch eine Arbeitsfluidleitung 20 verbunden. Die Austauscheinheiten A und C sind durch einen Absorptionsmittelkreislauf 22 verbunden, die Austauscheinheiten B und D durch einen Absorptionsmittelkreislauf 24. Bei allen Schaltungen, die Absorberkreise gemäß Fig. 1 enthalten, können die im In p/1/T-Diagramm am weitesten links oben gelegenen Paare miteinander gekoppelter Austauscheinheiten, also bei Fig. 1 die Austauscheinheiten B und D anstatt durch einen Absorptionsmittelkreislauf auch durch eine einfache Arbeitsfluidleitung verbunden sein, die je nach dem Umlaufsinn des Arbeitsfluids eine Drossel 24d oder eine Pumpe 24b für das zwischen diesen beiden Austauscheinheiten transportierte flüssige Arbeitsfluid enthält. Die Austauscheinheiten A bis D sind jeweils mit einer schematisch angedeuteten Vorrichtung zur Zuführung oder Entnahme von Wärme $Q_A$, $Q_B$, $Q_C$ bzw. $Q_D$ dargestellt.

Der in Fig. 1 dargestellte elementare Kreislauf repräsentiert je nach dem Umlaufsinn des Arbeitsfluids Wärmepumpen (Kältemaschinen) oder Wärmetransformatoren nach dem Absorptions- oder Desorptionsprinzip.

Im folgenden werden der in Fig. 1 dargestellte elementare Kreis und aus solchen Kreisen bestehende Schaltungen stark schematisiert dargestellt, und zwar werden Austauscheinheiten durch kleine Kreise und Arbeitsfluidleitungen sowie Absorptionskreisläufe durch einfache Striche dargestellt. Alle Nebenkomponenten sind weggelassen.

Die in Fig. 2 und 4 dargestellten Absorbermaschinen enthalten jeweils sechs Austauscheinheiten A, B, C, D, E und F. Wie ersichtlich, arbeiten die Austauscheinheiten A und B mit einem Druck $p_2$ (praktisch in einem gewissen Druckbereich um $p_2$, während die Austauscheinheiten C und D bzw. E und F mit einem Druck $p_1$ bzw. $p_o$ (in der Praxis in einem diese Drücke umgebenden Druckbereichen), die sukzessive kleiner als $P_1$ sind, arbeiten.

Die Austauscheinheiten arbeiten ferner in verschiedenen Temperaturbereichen $T_O$ bis $T_3$. Die mittleren Temperaturen der Temperaturbereiche $T_O$ bis $T_3$ nehmen in der angegebenen Reihenfolge zu.

Die Absorbermaschinen gemäß Fig. 2 oder 4 arbeiten mit einem Arbeitsmittelsystem, welches mindestens ein Arbeitsfluid und mindestens ein Absorptionsmittel enthält. Ein typisches Arbeitsmittelsystem ist $H_2O$ als Arbeitsfluid und $LiBr \cdot H_2O$ als Arbsorptionsmittel.

Die Austauscheinheiten B und C und/oder D und E sind vorzugsweise thermisch miteinander gekoppelt, was in Fig. 4 durch Wärmetauscher-Kreisläufe symbolisch dargestellt ist. Dies wird als "innerer Wärmetausch" (also Wärmeaustausch innerhalb der Einrichtung) bezeichnet. Die thermisch miteinander gekoppelten Austauscheinheiten enthalten im allgemeinen zusätzlich eine Vorrichtung zur Entnahme oder Zufuhr von Wärme.

Mit der beschriebenen Anordnung aus den sechs Austauscheinheiten A bis F und den zugehörigen anderen Komponenten lassen sich vier verschiedene Typen von Absorbermaschinen realisieren, je nachdem, in welcher Richtung das Arbeitsfluid in den verschiedenen Kreisen der Maschine strömt. Zur Erläuterung dieser Feststellung soll die Anordnung gemäß Fig. 2 als zweistufige Absorbermaschine angesehen werden, deren Hochtemperaturstufe die Austauscheinheiten A, B, C und D enthält, während die Niedertemperaturstufe die Austauscheinheiten C, D, E und F enthält. Jede Stufe kann nun entweder als Wärmepumpe (oder was im Prinzip das gleiche ist, als Kältemaschine), oder als Wärmetransformator ausgelegt werden. Wenn die betreffende Stufe als Wärmepumpe ausgelegt ist, zirkuliert das Arbeitsfluid in Uhrzeigerrichtung. Hierdurch ergeben sich die vier möglichen Typen.

Betrachtet man die beiden unabhängigen Arbeitsfluidkreisläufe ABCD sowie CDEF und bezeichnet die dort zirkulierenden Arbeitfluidströme mit n bzw. m, ergibt sich für die vier Typen:

Typ 1:     Wärmepumpe/Wärmepumpe
             $m > 0$ $n > 0$

Typ 2:     Wärmetrafo/Wärmepumpe
             $m < 0$ $n > 0$

Typ 3:     Wärmetrafo/Wärmetrafo
             $m < 0$ $n < 0$

Typ 4:     Wärmepumpe/Wärmetrafo
             $m > 0$ $n < 0$

Die Schaltungen gemäß Fig. 2 arbeiten im allgemeinsten Falle mit sechs Temperaturbereichen $T_0$ bis $T_3$. Durch Variation der Betriebsparameter läßt sich die Anzahl der Temperaturbereiche auf fünf oder sogar vier reduzieren. Fig. 4 zeigt Schaltungen der in Fig. 2 dargestellten Schaltung mit vier Temperaturbereichen Für die bei den jeweiligen Austauscheinheiten bzw. im jeweiligen Temperaturbereich umgesetzten Wärmeleistungen ergeben sich folgende Werte für die Schaltung gemäß Fig. 4.

| | |
|---|---|
| $Q_A = n$ | $Q_3 = n$ |
| $Q_C = -n + m$ | $Q_2 = -2n + m$ |
| $Q_E = -m$ | $Q_1 = n-2m$ |
| $Q_B = -n$ | $Q_0 = m$ |
| $Q_D = n-m$ | |
| $Q_F = m$ | |

Eine detaillierte Analyse der möglichen Betriebszustände der Einrichtung nach Fig. 4 ergibt, daß man acht Bereiche unterscheiden kann, wobei die Grenzen zwischen den jeweiligen Bereichen besonders ausgezeichnet sind. Diese Bereiche sind in Fig. 3 dargestellt.

In Fig. 3, in dem die Arbeitsfluidströme m und n aufgetragen sind, entsprechen die vier Quadranten den oben besprochenen vier Typen. Der erste und dritte Quadrant sind nochmals in drei Segmente unterteilt, deren Grenzen durch die Bedingungen

$$Q_0 = 0, Q_1 = 0, Q_2 = \text{bzw. } Q_3 = 0$$

definiert sind. Tabelle 1 (Zeilenbezeichnung linke Spalte) enthält die acht Vorzeichenkombinationen der Nettowärmeumsätze $Q_3$ bis $Q_0$ in den Temperaturbereichen $T_3$ bis $T_0$ beim Betrieb der Einrichtung gemäß Fig. 4 in den jeweiligen Betriebsbereichen 1 bis 8. Welches Vorzeichen die Wärmeumsätze der einzelnen Komponenten haben, kann den obigen Gleichungen entnommen werden. Die Wärmeaustauscher, die inneren Wärmetausch zwischen den Austauscheinheiten B und C bzw. D und E symbolisieren, sind nicht bei allen Betriebszuständen nötig. Es kann auch günstig sein, die Komponenten B und C bzw. D und E temperaturmäßig stärker gegeneinander zu verschieben.

Im folgenden werden die speziellen Eigenschaften der jeweiligen Betriebsbereiche bzw. -zustände diskutiert:

Betriebsbereich 1

Zufuhr von Antriebswärme bei A (z.B. fossile Heizung) und C (z.B. Solarwärme oder Abwärme bei 80 - 110°C), Kälteleistung bei F, Abwärme bzw. Nutzwärme bei D und E. Die bei B freiwerdende Wärme kann als zusätzliche Austreiberwärme in C verwendet werden. Wenn C bei höherer Temperatur liegt als B, wird die Kondensationswärme in B als Nutzwärme abgegeben.

Betriebsbereich 2

Antriebswärme bei A, Kälteleistung bei F, Nutzwärme bei C und/oder E und/oder D und/oder B. An den Grenzen des Betriebsbereichs 2 und in der Mitte ergeben sich folgende spezielle Betriebszustände:
a) Betriebszustand $Q_2 = 0$, d.h. $Q_B = -Q_C$; $n \approx m/2$.
Die in B durch Kondensation gewonnene Wärme kann vollständig zum Austreiben in C verwendet werden. Die Hälfte des in F verdampften Arbeitsfluids wird in A, die andere in C durch inneren Wärmetausch mit B erzeugt. Die Nutzwärme wird auf dem Niveau $T_1/T_1'$ aus D und E gewonnen.
b) Betriebszustand $Q_C = 0$ und $Q_D = 0$; $n = m$.
In C und D findet kein Wärmeumsatz statt. Würde man diese beiden Austauscheinheiten C und E eliminieren, erhielte man einen elementaren Kreislauf.
c) Betriebszustand $Q_1 = 0$, d.h. $Q_D = -Q_E$; $n \approx 2m$

Betriebsbereich 3

Antriebswärme bei A, Kälteleistung bei F und D, Abwärme bzw. Nutzwärme, bei B und C. Die in E anfallende Wärme kann entweder zusätzlich zum Verdampfen in D verwendet werden oder durch Verschieben von E zu höheren Temperaturen als Abwärme (Nutzwärme) abgeführt werden.

Betriebsbereich 4

Dieser Betriebszustand beschreibt einen Wärmepumpentransformator, bei dem der Niedertemperaturkreis CDFE als Wärmetransformator und der Hochtemperaturkreis ABDC als Wärmepumpe arbeitet.

4

Betriebsbereiche 5, 6 und 7

Beide elementaren Kreise arbeiten als Wärmetransformatoren. Besonders interessant ist wieder der Betriebsbereich 6 für den die Leistungsziffer kontinuierlich zwischen 1/3 (n = m/2), 1/2 (n = m) bis 2/3 (n = 2m) verändert werden kann, wobei sich natürlich unterschiedliche mittlere Temperaturhübe ergeben.

Betriebsbereich 8

Der Niedertemperaturteil arbeitet hier als Wärmepumpe ( = Kältemaschine) = und der Hochtemperaturteil als Wärmetransformator. Mit dieser Maschine kann durch Zufuhr von Antriebswärme bei B und C Kälteleistung bei F und gleichzeitig Nutzwärme (Prozeßwärme) auf dem höheren Temperaturniveau $T_3$ bei A erzeugt werden. Die bei D und E entstehende Wärme ist Abwärme oder ebenfalls Nutzwärme, wenn $T_1$ noch hoch genug ist. Die Wärmepumpe und der Wärmetransformator können unabhängig voneinander laufen, so daß das Verhaltnis von Nutzkälte bei F und Nutzwärme bei A je nach Nachfrage eingestellt werden kann.

Einrichtungen mit der Schaltung gemäß Fig. 4, die ausschließlich für den Betriebszustand $Q_1 = 0$, n>0 oder $Q_2 = 0$ konstruiert sind, sollen nicht unter den Gegenstand der vorliegenden Erfindung fallen, da solche Einrichtungen aus US-A-3,651,655 (Dyre)s bzw. DE-B-21 36 408 (Carrier) bekannt sind. Ferner werden Kältemaschinen mit der Schaltung gemäß Fig. 4 nicht beansprucht, die für einen Betrieb im Bereich 4 der Fig. 3 konstruiert sind.

Die Betriebsparameter der Schaltung gemäß Fig. 2 oder 4 können ferner so gewählt werden, daß die Austauscheinheiten B und E im gleichen Temperaturbereich arbeiten (wie in Fig. 2 gestrichelt dargestellt ist) und ein innerer Wärmetausch nun zwischen diesen beiden Austauscheinheiten durchgeführt werden kann.

In Fig. 5a bis c sind drei vorteilhafte mehrstufige Absorberschaltungen für das Arbeitsmittelsystem Lithiumbromid/Wasser dargestellt.

Bei der Schaltung gemäß Fig. 5 kann sich das niedrigste Temperaturniveau unter 0°C erstrecken, da die im niedrigsten Temperaturniveau arbeitende Austauscheinheit Lithiumbromid enthält, das den Gefrierpunkt des Wassers erniedrigt. Die Austauscheinheit H arbeitet also als Desorber. Durch den inneren Wärmeaustausch zwischen G und F tritt trotz des schmalen Lösungsfeldes des Artbeitsmittelsystems Lithiumbromid/Wasser die Abwärme bei dem verhältnismäßig hohen Temperaturniveau auf, in dem die Austauscheinheit E arbeiten. Die Temperaturniveaus können bei einer Einrichtung gemäß Fig. 5 folgende ungefähre Werte haben:

-5 bis 0°C; 30°C; 60°C; 100°C; 140 bis 150°C.

Der Wirkungsgrad der Schaltung gemäß Fig. 5a läßt sich durch einen zusätzlichen Absorberkreislauf mit Wärmetausch erhöhen, wie es in den Figuren 5b und 5c dargestellt ist.

Läßt man bei Fig. 5c die auf dem niedrigsten Druckniveau arbeitenden Austauscheinheiten weg, so erhält man ebenfalls eine funktionsfähige Schaltung.

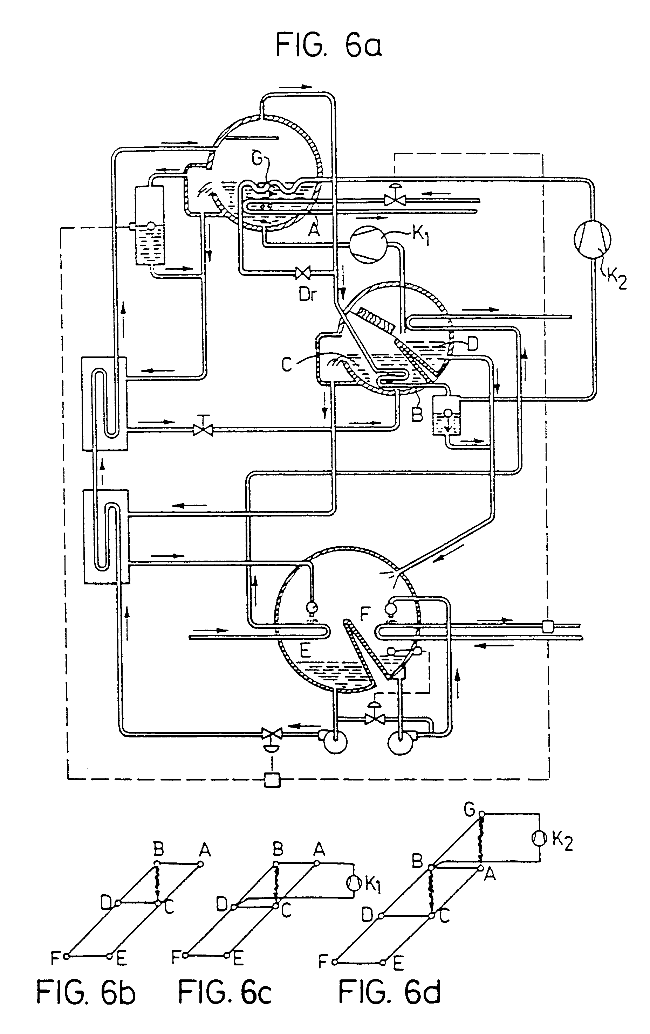

Fig. 6a zeigt, wie eine aus DE-B-21 36 408 und US-A-3,651,655 (Dyre) bekannte Einrichtung zu einer erfindungsgemäßen Einrichtung umgebaut werden kann. Das Schaltbild der bekannten Einrichtung ist in Fig. 6b dargestellt. Die Austauscheinheiten sind dabei jeweils mit den gleichen Großbuchstaben bezeichnet.

Eine erste vorteilhafte Weiterbildung der bekannten Einrichtung gemäß Fig. 6b besteht nun darin, zwischen die Austauscheinheiten D und A einen Kompressor $K_1$ zu schalten, wie es in Fig. 6a und 6c dargestellt ist.

Besonders vorteilhaft ist jedoch die in Fig. 6d und auch in Fig. 6a dargestellte alternative Variante mit dem Kompressor $K_2$ und einer zusätzlichen Austauscheinheit G, die als ein als Kondensator arbeitendes Wärmetauscherelement in der Austauscheinheit A ausgebildet und in der aus Fig. 6a ersichtlichen Weise geschaltet ist. Das Kondensat aus dem Kondensator G wird über eine Drossel Dr in die zur Austauscheinheit B führende Dampfleistung eingespeist, so daß es ebenfalls Wärme an die Austauscheinheit C abgeben kann.

In den Kältemaschinen gemäß Fig. 6a wird als Arbeitsmittelsystem vorzugsweise Lithiumbromidlösung/Wasser verwendet. Ein erster Vorteil der in der beschriebenen Weise erfindungsgemäß ausgebildeten Kältemaschinen gemäß Fig. 6a besteht darin, daß die Kälteleistung durch gleichzeitige Zufuhr von Heizenergie zur Austauscheinheit A und mechanischer Energie zum Kompressor K erhöht werden kann. Es ist jedoch auch möglich, die erfindungsgemäßen Kältemaschinen entweder mit Heizenergie oder mit der Antriebsenergie des Kompressors oder mit verschiedenen Verhältnissen dieser beiden Energiearten zu betreiben.

Besonders vorteilhafte Verhältnisse ergeben sich, wenn der Kompressor durch einen Verbrennungsmotor angetrieben wird, da in diesem Falle die Auspuffwärme als Heizwärme in die Austauscheinheit A eingespeist werden kann, die Kühlwasserwärme als zusätzliche Wärme in die Austauscheinheit C. Bei der Einrichtung gemäß Fig. 6a würde man, ähnlich wie in der Austauscheinheit A, eine Heizvorrichtung in der Austauscheinheit C vorsehen. Wenn man die Kältemaschinen gem. Fig. 6a und 6d so kontruieren will, daß die Antriebsenergie ganz oder zumindest überwiegend über den Kompressor zugeführt wird, so können die Austauscheinheiten B, C und D im Vergleich zu den anderen Austauscheinheiten relativ klein bemessen werden.

Wenn man die Kältemaschinen gemäß Fig. 6 mit dem Arbeitsmittelsystem Lithiumbromidlösung/Wasser für eine Kälteerzeugung bei Temperaturen unter 0°C verwenden will oder als Wärmepumpen, die auch noch bei einer Verdampfertemperatur unter 0°C betriebsfähig sind, kann man die Schaltungen gemäß Fig. 6d analog zu Fig. 5 um zwei weitere Austauscheinheiten entsprechend den Austauscheinheiten G und H in Fig. 5 mit dem dort dargestellten inneren Wärmetausch nach F ergänzen. In der Austauscheinheit H wird eine gewisse Lithiumbromidkonzentration aufrecherhalten, um den Gefrierpunkt des Wassers genügend herabzusetzen. Diese Konzentration kann in der Praxis sehr klein sein (einige Prozent).

TABELLE 1

| Betriebsbereich | | 1 | 2 | 3 | 4 | 5 | 6 | 7 | 8 |
|---|---|---|---|---|---|---|---|---|---|
| Netto-Wärme-Umsatz | $Q_3$ | + | + | + | + | - | - | - | - |
| | $Q_2$ | + | - | - | - | - | + | + | + |
| | $Q_1$ | - | - | + | + | + | + | - | - |
| | $Q_0$ | + | + | + | - | - | - | - | + |

## Patentansprüche

1. Mehrstufige Einrichtung zum Nutzbarmachen von Wärmeenergie, die mindestens sechs Austauscheinheiten (A bis F in Fig. 2 und 4) enthält, welche als Austreiber, Kondensator, Verdampfer bzw. Absorber arbeiten, paarweise in drei verschiedenen Druckbereichen ($p_0$, $p_1$, $p_2$) arbeiten und zwei Arbeitsmittelkreisläufe bilden, von denen der eine, erste, in dem das Arbeitsmittel mit einem Durchsatz n zirkuliert, eine erste und eine zweite Austauscheinheit (A, B), die in einem ersten, oberen Druckbereich sowie einem höheren bzw. niedrigeren Temperaturbereich dieses Druckbereiches arbeiten, und eine dritte und eine vierte Austauscheinheit (C, D), die in einem zweiten, mittleren Druckbereich sowie einem höheren bzw. niedrigeren Temperaturbereich dieses Druckbereiches arbeiten, enthält, und der andere, zweite, in dem das Arbeitsmittel mit dem Durchsatz m zirkuliert, die dritte und die vierte Austauscheinheit (C, D) sowie eine fünfte und eine sechste Austauscheinheit (E, F), die in einem dritten, unteren Druckbereich sowie einem höheren bzw. niedrigeren Temperaturbereich dieses Druckbereiches arbeiten, enthält, wobei ein positives Vorzeichen von m oder n einem Zirkulieren des Arbeitsmittels im Sinne einer Wärmepumpe und ein negatives Vorzeichen von n oder m ein Zirkulieren des Arbeitsmittels im Sinne eines Wärmetransformators bedeutet, **dadurch gekennzeichnet**, daß der Arbeitsmitteldurchsatz in den beiden Arbeitsmittelkreisläufen dadurch in Bezug aufeinander einstellbar ist, daß mindestens eine der folgenden Bedingungen a) bis h) erfüllt ist:

a) n < 0, m < 0 mit der Ausnahme des Bereiches (Bereich 5 in Fig. 3) für Werte von n, die kleiner oder gleich null und größer oder gleich μ sind, wobei μ die Werte von n sind, die sich ergeben, wenn ein vollständiger innerer Wärmetausch zwischen der dritten Austauscheinheit (C) und der zweiten Austauscheinheit (B) stattfindet ($Q_2 = 0$), und mit Ausnahme der Werte von n und m, die sich ergeben, wenn zwischen der vierten und der fünften Austauscheinheit (D, E) ein vollständiger Wärmetausch stattfindet;

b) m > 0, n < 0 (Bereich 8, Fig. 3);

c) Es ist eine Vorrichtung zum Wärmeaustausch zwischen der fünften Austauscheinheit (E) und der vierten Austauscheinheit (D) vorgesehen und mindestens eine dieser Austauscheinheiten (D, E) ist mit einer Vorrichtung zum Wärmeaustausch mit einem von außen zugeführten Wärmeträgermedium versehen;

d) Es ist je eine Vorrichtung zum Wärmeaustausch zwischen der fünften Austauscheinheit (E) und der vierten Austauscheinheit (D) sowie zwischen der dritten Austauscheinheit (C) und der zweiten Austauscheinheit (B) vorgesehen (Fig. 4);

e) Es ist eine Vorrichtung zum Wärmetausch zwischen der zweiten Austauscheinheit (B) und der fünften Austauscheinheit (E') vorgesehen (Fig. 2);

f) Die zweite Austauscheinheit (B) steht im Wärmetausch mit der dritten Austauscheinheit (C) und die sechste Austauscheinheit (F) steht im Wärmetausch mit einer siebenten Austauscheinheit (G), die in einem höheren Temperaturbereich eines vierten Druckbereiches, der niedriger ist als der dritte, arbeitet und die mit einer achten Austauscheinheit (H), die in einem niedrigeren Temperaturbereich des vierten Druckbereiches arbeitet, sowie mit der dritten und der vierten Austauscheinheit (C, D) in einem Arbeitsmittelkreislauf liegt;

g) Die zweite Austauscheinheit (B) steht im Wärmetausch mit der dritten Austauscheinheit (C); der erste Druckbereich enthält eine siebte Austauscheinheit, die in einem höheren Temperaturbereich als die erste Austauscheinheit (A) arbeitet und mit dieser verbunden ist, und der zweite Druckbereich enthält eine achte Austauscheinheit, die in einem höheren Temperaturbereich als die dritte Austauscheinheit (C) arbeitet, mit dieser und der siebten Austauscheinheit verbunden ist und mit der ersten Austauscheinheit im Wärmetausch steht;

h) Die zweite Austauscheinheit (B) steht im Wärmetausch mit der dritten Austauscheinheit (C) und mit dem ersten Arbeitsmittelkreis (A-B-C-D) ist ein Druckmaschinenkreis gekoppelt (Fig. 6c, 6d).

2. Verfahren zum Betrieb einer Einrichtung nach Anspruch 1, **dadurch gekennzeichnet**, daß mindestens einer der Betriebsparameter Druck, Temperatur und Arbeitsmitteldurchsatz einer Austauscheinheit, die beiden Kreisläufen angehört, als Regelgröße für die Einrichtung verwendet wird.

## Claims

1. A multi-stage apparatus for harnessing heat energy comprising at least six exchange units (A to F in Figs. 2 and 4) which operate as generator, condensator, evaporator and absorber, respectively, which operate in pairs in three different pressure ranges ($p_0$, $p_1$, $p_2$) and which form two working fluid circuits of which one, a first, in which the working fluid circulates with a through-put $\underline{n}$, includes a first and a second of said exchange units (A, B) operating in a first high pressure range and higher and lower temperature ranges, respectively, of this pressure range, and a third and a fourth of said exchange units (C,D) operating in a second intermediate pressure range and higher and lower temperature ranges, respectively, of this pressure range, and the other, the second circuit, in which the working fluid circulates with a through-put $\underline{m}$, includes said third and fourth exchange units (C, D) as well as fifth and sixth of said exchange units (E, F) operating in a third low pressure range and higher and lower temperature ranges, respectively, of this pressure range; a positive sign of $\underline{m}$ or $\underline{n}$ meaning a circulation of the working fluid in the sense of a heat pump, and a negative sign of $\underline{n}$ or $\underline{m}$ meaning a circulation of the working fluid in the sense of a heat transformer, **characterized in that** the working fluid through-puts in said first and second working fluid circuits are adapted to be chosen in respect to each other by the fullfilment of at least one of the following conditions a) to h):

a) $\underline{n} < 0$, $\underline{m} < 0$ with the exception of a region (region 5 in Fig. 3) for values of $\underline{n}$ which are smaller or equal zero and larger or equal $\mu$, wherein $\mu$ are the values of $\underline{n}$, which result, when a complete internal heat exchange prevails between said third exchange unit (C) and said second exchange unit (B) ($Q_2 = 0$), and with the exception of the values of $\underline{n}$ and $\underline{m}$ which result when a complete heat exchange prevails between said fourth and fifth exchange units (D, E);

b) $\underline{m} > 0$, $\underline{n} < 0$ (region 8, Fig. 3),

c) means being provided for heat exchange between said fifth exchange unit (E) and said fourth exchange unit (D) and at least one of these exchange units (D, E) is provided with means for heat exchange with a heat carrier medium supplied from outside;

d) means for heat exchange are provided both between said fifth (E) and fourth (D) exchange unit and between said third (C) and second (B) exchange units (Fig. 4);

e) means is provided for heat exchange between said second exchange unit (B) and said fifth exchange unit (E') (Fig. 2);

f) said second exchange unit (B) is in heat exchange with said third exchange unit (C), and said sixth exchange unit (F) is in heat exchange with a seventh exchange unit (G) which operates in a higher temperature region of a fourth pressure range which is lower than said third pressure range and which is in a working fluid circuit together with an eighth exchange unit (H) operating in a lower temperature range of said fourth pressure range, and with said third and fourth exchange units (C, D);

g) said second exchange unit (B) is in heat exchange with said third exchange unit (C); said first pressure range further comprises a seventh exchange unit which operates in a higher temperature range than said first exchange unit (A) and is coupled with this exchange unit, and said second pressure range further comprises an eighth exchange unit which operates in a higher temperature range than said third exchange unit (C) and is coupled with this exchange unit and said seventh exchange unit and is in heat exchange with said first first exchange unit;

h) said second exchange unit (B) is in heat exchange with said third exchange unit (C); and a pressure machine circuit is coupled with said first working fluid circuit (A-B-C-D) (Fig. 6c, 6d).

2. A method of operating an apparatus as claimed in claim 1, **characterized in that** at least one of the operating parameters pressure, temperature and working fluid through-put of an exchange unit which is included in both circuits, is used as regulating magnitude for the apparatus.

## Revendications

1. Dispositif multi-étage dest né à rendre utilisable de l'énergie thermique, qui comprend au moins six unités échangeuses (A à F aux figures 2 et 4), qui fonctionnent en tant qu'extracteur, condenseur, vaporiseur ou absorbeur, travaillent par paires dans trois plages de pression différentes ($P_0$, $P_1$, $P_2$) et forment deux circuits à agent de travail, dont l'un, le premier, dans lequel circule l'agent de travail selon un débit n, comprend une première et une seconde unités échangeuses (A, B) qui fonctionnent dans une première plage de pressions supérieure ainsi que dans une plage de températures plus élevée ou plus basse de cette plage de pressions, et une troisième et une quatrième unités échangeuses (C, D), qui travaillent dans une seconde plage de pressions moyenne ainsi que dans une plage de températures plus élevée ou plus basse de cette plage de pressions, et l'autre, le second, dans lequel circule l'agent de travail selon le débit m, comprend la troisième et la quatrième unités échangeuses (C, D) ainsi qu'une cinquième et une sixième unités échangeuses (E, F) qui travaillent dans une troisième plage de pressions inférieures, ainsi que dans une plage de températures plus élevée ou plus basse de cette plage de pressions, un signe positif de m ou de n signifiant la circulation de l'agent de travail dans le sens d'une pompe à chaleur et un signe négatif de n ou de m signifiant la circulation de l'agent de travail dans le sens d'un transformateur de chaleur, caractérisé en ce que le débit de l'agent de travail peut être réglé dans les deux circuits à agent de travail l'un par rapport à l'autre du fait qu'au moins l'une des conditions suivantes a) à h) est remplie:

a) n < 0, m < 0 à l'exception de la plage (plage 5 à la figure 3) où les valeurs de n sont plus petites ou égales à zéro ou plus grandes ou égales à $\mu$, où $\mu$ représente les valeurs de n que l'on obtient avec un échange de chaleur interne complet entre la troisième unité échangeuse (C) et la seconde unité échangeuse (B) ($Q_2 = 0$), et à l'exception des valeurs de n et de m que l'on obtient quand a lieu entre la quatrième et la cinquième unités échangeuses (D, E) un échange de chaleur complet;

b) m > 0, n < 0 (plage 8, figure 3);

c) un dispositif d'échange de chaleur est prévu entre la cinquième unité échangeuse (E) et la quatrième unité échangeuse (D) et au moins l'une de ces unités échangeuses (D, E) est munie d'un dispositif pour un échange de chaleur avec un agent caloporteur amené de l'extérieur;

d) un dispositif d'échange de chaleur est prévu respectivement entre la cinquième unité échangeuse (E) et la quatrième unité échangeuse (D) et entre la troisième unité échangeuse (C) et la seconde unité échangeuse (B) (figure 4);

e) un dispositif d'échange de chaleur est prévu entre la seconde unité échangeuse (B) et la cinquième unité échangeuse (E') (figure 2);

f) la seconde unité échangeuse (B) est à l'état d'échange de chaleur avec la troisième unité échangeuse (C) et la sixième unité échangeuse (F) est à l'état d'échange de chaleur avec une septième unité échangeuse (G) qui travaille dans une plage de températures plus élevée d'une quatrième plage de pressions qui est plus basse que la troisième, et est située dans un circuit à agent de travail avec une huitième unité échangeuse (H) qui travaille dans une plage de températures plus basse de la quatrième plage de pressions ainsi qu'avec la troisième et la quatrième unités échangeuses (C, D);

g) la seconde unité échangeuse (B) est à l'état d'échange de chaleur avec la troisième unité échangeuse (C); la première plage de pressions comprend une septième unité échangeuse qui travaille dans une plage de températures plus élevée que la première unité échangeuse (A) et est reliée à cette dernière, et la seconde plage de pressions comprend une huitième unité échangeuse qui travaille dans une plage de températures plus élevée que la troisième unité échangeuse (C), est reliée à cette dernière et à la septième unité échangeuse et est à l'état d'échange de chaleur avec la première unité échangeuse;

h) la seconde unité échangeuse (B) est à l'état d'échange de chaleur avec la troisième unité échangeuse (C) et un circuit pour machine à pression est accouplé au premier circuit d'agent de travail (A-B-C-D) (figures 6c, 6d).

2. Procédé pour la mise en oeuvre du dispositif selon la revendication 1, caractérisé en ce qu'au moins l'un des paramètres de fonctionnement constitués par la pression, la température et le débit de l'agent de travail d'une unité échangeuse qui appartient aux deux circuits est utilisé en tant que grandeur de régulation pour le dispositif.

FIG.1

FIG. 2

FIG. 3

FIG. 4

FIG. 5

a)   b)   c)   d)

## FIG. 6a

FIG. 6b    FIG. 6c    FIG. 6d